# EUROPEAN PATENT APPLICATION

(11) **EP 4 733 025 A1**
(43) Date of publication of application: **29.04.2026**
(21) Application number: 24825923.6
(22) Date of filing: 19.06.2024
(51) Int. Cl.: B28B 1/50, B28B 5/02, B28B 11/14, B32B 13/08, B65H 23/18

(54) **GYPSUM BOARD MANUFACTURING DEVICE AND GYPSUM BOARD MANUFACTURING METHOD**

(30) Priority: 22.06.2023 JP 2023102665
(71) Applicant: Yoshino Gypsum Co., Ltd., Tokyo 100-0005 (JP)
(72) Inventor: SAITOH, Kazushi, Tokyo 100-0005 (JP); TANI, Hirokuni, Tokyo 100-0005 (JP)
(74) Representative: Ter Meer Steinmeister & Partner
(86) International application number: PCT/JP2024/022186
(87) International publication number: WO 2024/262522

(57) **Abstract**

A gypsum plate manufacturing device configured to manufacture a gypsum plate in which at least an upper surface and a lower surface of a gypsum core are covered by a covering member includes a conveying device configured to convey the covering member; a mixer configured to prepare a gypsum slurry containing calcined gypsum and water, and supply the gypsum slurry onto the covering member; a pressing device including a pressing member configured to press the covering member, being conveyed by the conveying device, against the conveying device, and a driving device configured to change a distance between the pressing member and the covering member; and a control device configured to control the driving device to change the distance between the pressing member and the covering member, and switch between a pressing state, in which the pressing member presses the covering member against the conveying device, and a separating state, in which the pressing member is separated from the covering member. The control device sets the pressing state in response to the conveying device starting conveyance of the covering member, and subsequently switches from the pressing state to the separating state.

## Description

### TECHNICAL FIELD

The present invention relates to a gypsum plate manufacturing device and a gypsum plate manufacturing method.

### BACKGROUND ART

Patent Literature 1 discloses a gypsum board manufacturing method including: feeding a gypsum board base sheet in the form of a roll onto the upper surface of an endless belt conveyor; continuously dropping a hardened gypsum paste from a first mixer onto the upper surface of the fed base sheet; leveling the dropped hardened gypsum paste to be flat by a first roller; continuously dropping lightweight aerated gypsum from a second mixer onto the upper surface of the leveled hardened gypsum paste; leveling the dropped lightweight aerated gypsum to be flat by a second roller; continuously dropping a hardened gypsum paste from a third mixer onto the upper surface of the leveled lightweight aerated gypsum; while leveling the dropped hardened gypsum paste to be flat by a third roller, winding a separate gypsum board base sheet in the form of a roll around the third roller and adhering the separate gypsum board base sheet onto the upper surface of the leveled hardened gypsum paste; conveying the resulting product to a cutting step in which it is cut to an appropriate width; and drying the cut product.

### CITATION LIST

### PATENT LITERATURE

Patent Literature 1: Japanese Laid-Open Patent Publication No. 1977-144028

### SUMMARY OF THE INVENTION

### TECHNICAL PROBLEM

A gypsum plate including covering members disposed at surfaces of the gypsum plate is manufactured by supplying a gypsum slurry between the covering members being conveyed, followed by molding and curing the gypsum slurry.

Therefore, at the time of start of manufacturing the gypsum plate, conveyance of the covering members is started, and then preparation and supply of the gypsum slurry are started. However, the covering members are lightweight materials, such as paper, nonwoven fabric, or the like, and thus it is difficult to stably convey the covering members alone before the start of the supply of the gypsum slurry.

In one aspect of the present invention, it is an object to provide a gypsum plate manufacturing device configured to successfully convey covering members by a conveying device before supply of a gypsum slurry.

### SOLUTION TO THE PROBLEM

In order to address with the above issue, the present invention provides, in one aspect, a gypsum plate manufacturing device configured to manufacture a gypsum plate in which at least an upper surface and a lower surface of a gypsum core are covered by a covering member. The gypsum plate manufacturing device includes: a conveying device configured to convey the covering member; a mixer configured to prepare a gypsum slurry containing calcined gypsum and water, and supply the gypsum slurry onto the covering member; a pressing device including a pressing member configured to press the covering member, being conveyed by the conveying device, against the conveying device, and a driving device configured to change a distance between the pressing member and the covering member; and a control device configured to control the driving device to change the distance between the pressing member and the covering member, and switch between a pressing state, in which the pressing member presses the covering member against the conveying device, and a separating state, in which the pressing member is separated from the covering member. The control device sets the pressing state in response to the conveying device starting conveyance of the covering member, and subsequently switches from the pressing state to the separating state.

### ADVANTAGEOUS EFFECTS OF THE INVENTION

According to one aspect of the present invention, it is possible to provide a gypsum plate manufacturing device configured to successfully convey covering members by a conveying device before supply of a gypsum slurry.

### BRIEF DESCRIPTION OF THE DRAWINGS

[FIG. 1A] FIG. 1A is an explanatory view of a gypsum plate manufacturing device according to one embodiment of the present invention.
[FIG. 1B] FIG. 1B is an explanatory view of the gypsum plate manufacturing device according to the embodiment of the present invention.
[FIG. 1C] FIG. 1C is an explanatory view of the gypsum plate manufacturing device according to the embodiment of the present invention.
[FIG. 1D] FIG. 1D is an explanatory view of the gypsum plate manufacturing device according to the embodiment of the present invention.
[FIG. 2A] FIG. 2A is an explanatory view of one configuration example of a pressing device.
[FIG. 2B] FIG. 2B is an explanatory view of one configuration example of the pressing device.
[FIG. 2C] FIG. 2C is an explanatory view of one configuration example of the pressing device.
[FIG. 3] FIG. 3 is an explanatory view of a disposition of the pressing device in the gypsum plate manufacturing device according to the embodiment of the present invention.

### DESCRIPTION OF THE EMBODIMENTS

In the following, embodiments of the present invention will be described with reference to the drawings. However, the present invention is not limited to the following embodiments, and various modifications and substitutions can be added thereto without departing from the scope of the present invention.

### [Gypsum Plate Manufacturing Device]

Hereinafter, a gypsum plate manufacturing device according to one embodiment (hereinafter referred to as an "embodiment") of the present disclosure will be described with reference to the drawings.

The drawings are all schematic for describing the configuration of the gypsum plate manufacturing device of the present embodiment, and do not accurately illustrate the size and the like.

### (1) Regarding Gypsum Plate

No particular limitation is imposed on the type of a gypsum plate manufactured by the gypsum plate manufacturing device of the present embodiment or a gypsum plate manufacturing method described below.

The gypsum plate manufactured by the gypsum plate manufacturing device of the present embodiment or the like is, for example, a gypsum plate in which at least the upper surface and the lower surface of a gypsum core are covered by a covering member. The description "at least the upper surface and the lower surface of a gypsum core are covered by a covering member" also includes a case in which the covering member is buried near the upper surface and the lower surface of the gypsum core. Therefore, the gypsum plate in which at least the upper surface and the lower surface of the gypsum core are covered by the covering member can be described, for example, as a gypsum plate in which the covering member is disposed over at least the upper surface and the lower surface of the gypsum core.

The gypsum plate is, for example, one selected from glass mat gypsum boards, plates containing glass fiber nonwoven fabric-containing gypsum, gypsum boards stipulated in JIS A 6901 (2014), gypsum boards that are lighter or heavier than the gypsum boards stipulated in JIS A 6901 (2014) (hereinafter the above gypsum boards stipulated in the JIS, and the gypsum boards that are lighter or heavier than the gypsum boards stipulated in the JIS may be collectively referred to as "gypsum boards").

The glass mat gypsum boards are, for example, gypsum plates in which at least the upper surface and the lower surface of the gypsum core are covered by a glass mat serving as the covering member.

The plates containing glass fiber nonwoven fabric-containing gypsum are, for example, gypsum plates in which glass fiber nonwoven fabric (glass tissue) serving as the covering member is buried near at least the upper surface and the lower surface of the gypsum core.

The gypsum board is, for example, a gypsum plate in which at least the upper surface and the lower surface of the gypsum core is covered by a gypsum board base sheet serving as the covering member.

Depending on the aspect of the gypsum plate, the gypsum plate may be such that at least a part of the side surfaces of the gypsum core is covered by the covering member.

### (2) Regarding Configuration of Gypsum Plate Manufacturing Device

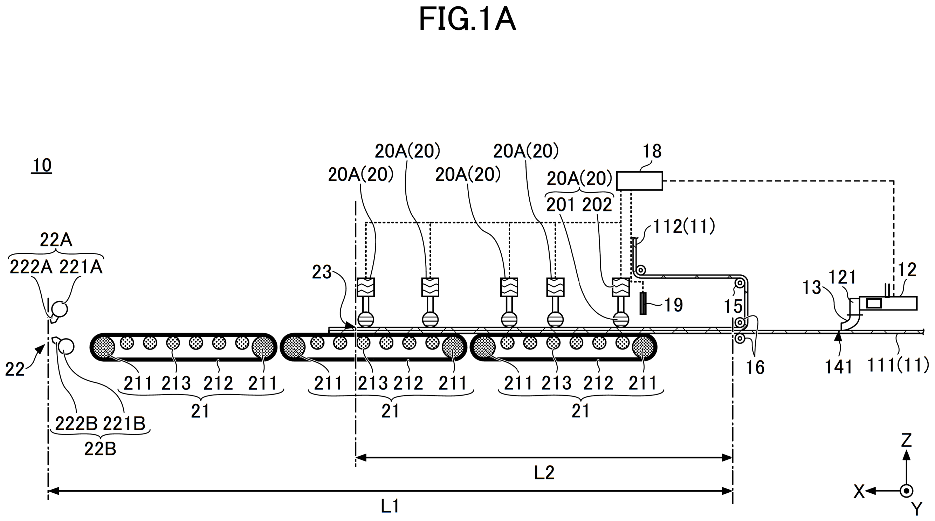

Hereinafter, taking as an example a case of manufacturing a gypsum board, a configuration of the device will be described with reference to FIGS. 1A to 1D as a configuration example of the gypsum plate manufacturing device of the present embodiment.

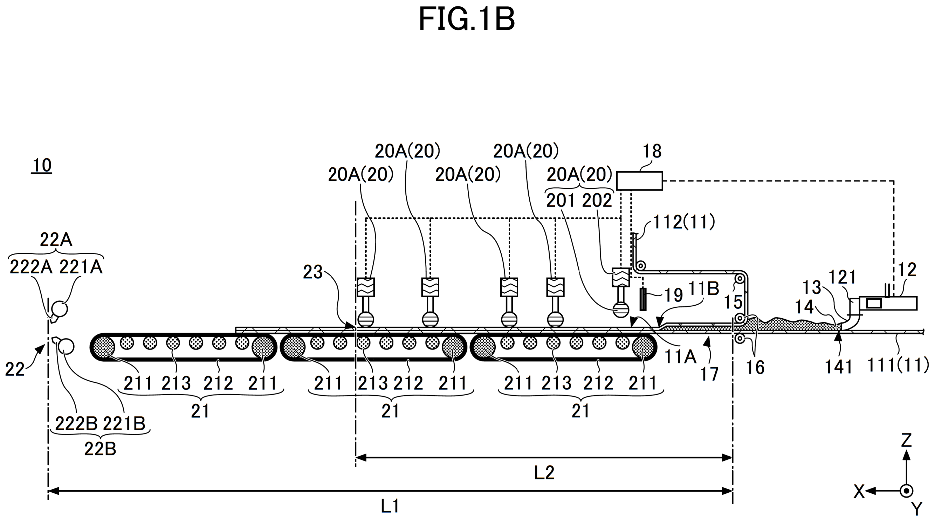

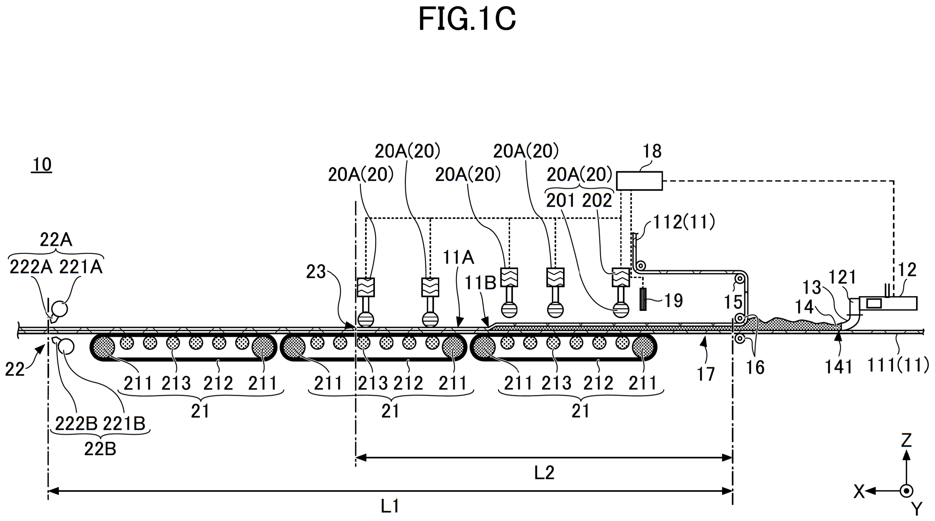

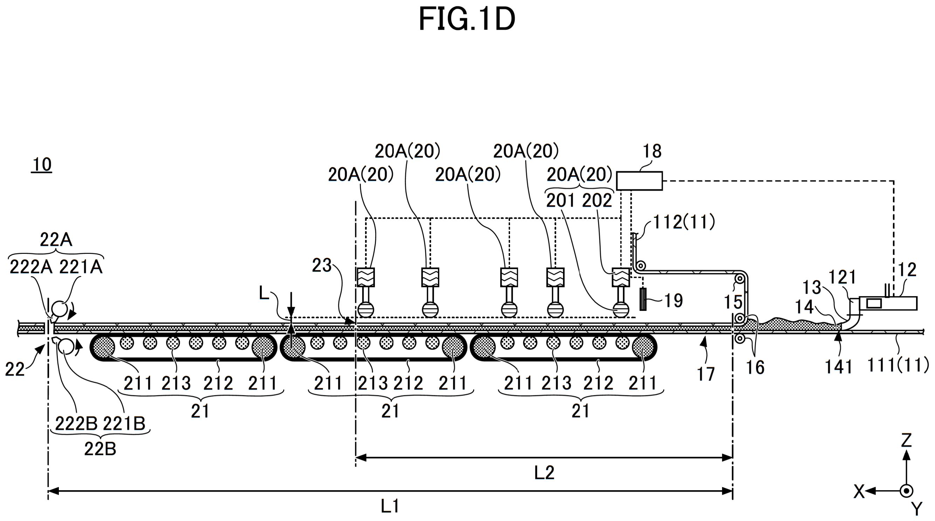

FIGS. 1A to 1D are explanatory views of the gypsum plate manufacturing device according to the present embodiment. FIG. 1A illustrates a state that is immediately after the start of an operation of the gypsum plate manufacturing device, and in which conveyance of covering members 11 alone is started. FIGS. 1B and 1C illustrate a change over time immediately after the start of supply of a gypsum slurry. FIG. 1D illustrates a normal state of manufacturing gypsum plates, i.e., a state in which gypsum plates are manufactured constantly.

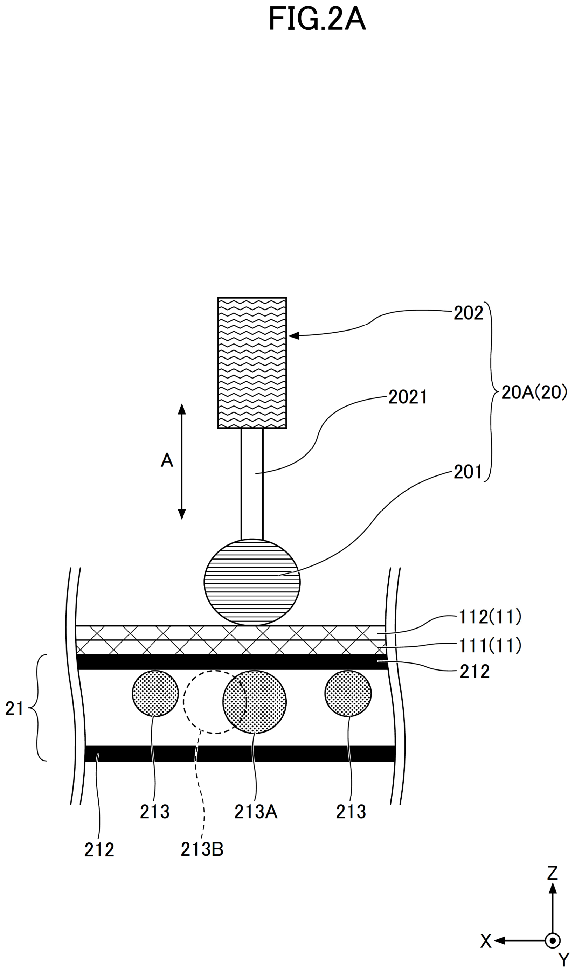

As illustrated in FIGS. 1A to 1D, a gypsum plate manufacturing device 10 of the present embodiment includes conveying devices 21, a mixer 12, pressing devices 20, and a control device 18. Hereinafter, the configuration example of the gypsum plate manufacturing device will be described. In FIGS. 1A to 1D and FIGS. 2A to 2C, an X axis is an axis along the conveying direction of the covering members 11, a Y axis is an axis along the width of the covering members 11, and a Z axis is an axis along the height of the covering members 11.

### (2-1) Mixer

The mixer 12 is configured to prepare a gypsum slurry containing calcined gypsum and water, and supply the gypsum slurry onto the covering member. Therefore, the mixer 12 can be disposed at a predetermined position in relation to the conveying path of the covering members 11, such as a first gypsum board base sheet 111, a second gypsum board base sheet 112, and the like. For example, the mixer 12 can be disposed above or laterally of the conveying path of the covering members 11. In the mixer 12, the gypsum slurry can be prepared by kneading calcined gypsum, serving as a raw material of the gypsum slurry, water, and optionally, various additives, and foams.

Here, the calcined gypsum is also referred to as calcium sulfate 1/2 hydrate, and is an inorganic composition having hydraulic properties. As the calcined gypsum, it is possible to use β-type calcined gypsum alone, α-type calcined gypsum alone, or a mixture of β-type calcined gypsum and α-type calcined gypsum. The β-type calcined gypsum is obtained by calcining, in the atmosphere, natural gypsum, by-product gypsum, flue gas desulfurization gypsum, recycled gypsum of, for example, a waste gypsum plate, or the like; or gypsum in which any combination of these is mixed. The α-type calcined gypsum is obtained by calcining, in water (including in vapor), natural gypsum, by-product gypsum, flue gas desulfurization gypsum, recycled gypsum of, for example, a waste gypsum plate, or the like; or gypsum in which any combination of these is mixed.

The calcined gypsum to be used as a raw material for manufacturing a gypsum plate preferably contains the β-type calcined gypsum. More preferably, the main component of the calcined gypsum to be used as the raw material of the gypsum plate is the β-type calcined gypsum. The description "the main component of the calcined gypsum to be used as the raw material of the gypsum plate is the β-type calcined gypsum" means that the β-type calcined gypsum occupies more than 50% by mass of the calcined gypsum to be used as the raw material of the gypsum plate. The calcined gypsum to be used as the raw material for manufacturing the gypsum plate may consist of the β-type calcined gypsum.

For manufacturing the α-type calcined gypsum, gypsum dihydrate of, for example, natural gypsum needs to be calcined under pressure in water or vapor using an autoclave. The β-type calcined gypsum can be manufactured by calcining gypsum dihydrate of, for example, natural gypsum in the atmosphere at a normal pressure. Thus, the β-type calcined gypsum can be manufactured with high productivity compared to the α-type calcined gypsum.

Examples of the additives include, for example, one or more selected from adhesion improvers, such as starch, polyvinyl alcohol, and the like; inorganic fibers, such as glass fibers and the like; lightweight aggregates; refractory materials, such as vermiculite and the like; setting retarders; setting accelerators; water-reducing agents; foaming agents, such as sodium alkyl sulfates, alkyl ether sulfates, sodium alkylbenzene sulfonates, polyoxyethylene alkyl sulfates, and the like; foam size adjusting agents, such as sulfosuccinate surfactants and the like; water repellents, such as silicone, paraffin, and the like; organic carboxylic acids; organic carboxylates; and the like.

The adhesion improver is an additive for improving the adhesion between a hardened gypsum body (a hardened gypsum slurry) and the covering members, such as the gypsum board base sheets or the like.

Note that the calcined gypsum and some of the additives, such as solid additives and the like, may be mixed and stirred in advance, and the resulting mixture, i.e., the resulting gypsum composition, may be supplied to the mixer 12.

Also, foams may be added from a gypsum slurry dispensing port 121 to adjust the amount of foams, thereby obtaining a gypsum slurry having a desired density.

Both the side ends of the first gypsum board base sheet 111 are folded in front of a molding device 16 along carved lines to extend upward and then extent inward, thereby wrapping a gypsum slurry. The second gypsum board base sheet 112 is turned, for example, by a turning roller 15 in the direction of a conveying line of the first gypsum board base sheet 111, and then sent to the molding device 16 without being folded.

As illustrated in FIGS. 1B to 1D, a gypsum slurry 14 supplied from the mixer 12 is supplied onto the first gypsum board base sheet 111, and the second gypsum board base sheet 112 is disposed atop the gypsum slurry 14 immediately prior to the molding device 16. Therefore, it is also possible to describe that the mixer 12 supplies the gypsum slurry between the two covering members 11.

### (2-2) Conveying Device

The conveying devices 21 can convey the covering members 11. In FIGS. 1A to 1D, the conveying devices 21 are illustrated only on a part of the conveying path of the covering members, i.e., the first gypsum board base sheet 111 and the second gypsum board base sheet 112. However, the conveying devices 21 can also be disposed in other parts on the conveying path of the covering members 11.

FIGS. 1A to 1D illustrate, as an example of the conveying device 21, a belt conveyor in which a belt 212 is wound around a pair of pulleys 211, and rollers 213 supporting the covering members and the like are disposed between the pair of pulleys 211. However, the conveying device 21 is not limited to the above form, as long as the conveying device 21 is a device configured to support and convey the covering members 11 and a gypsum slurry molded body 17.

As the conveying device 21, for example, it is possible to use one or more selected from a belt conveyor, a roll conveyor, and the like. The conveying device 21 may include a plurality of types of conveying devices, such as a belt conveyor and a roll conveyor.

### (2-3) Pressing Device

### (2-3-1) Configuration of Pressing Device

As illustrated in FIG. 1D, after supply of a sufficient amount of the gypsum slurry 14 from the mixer 12, the gypsum slurry 14 is disposed between the covering members 11, i.e., the first gypsum board base sheet 111 and the second gypsum board base sheet 112, thereby forming the gypsum slurry molded body 17 having a sufficient weight. Therefore, the conveying devices 21 located downstream of the molding device 16 can readily convey the gypsum slurry molded body 17.

However, as illustrated in FIG. 1A, for example, at the time of start of manufacturing the gypsum board, the two covering members 11, i.e., the first gypsum board base sheet 111 and the second gypsum board base sheet 112, are conveyed by the conveying device 21 in a state in which they are stacked one top of the other, downstream of the molding device 16. The two covering members 11 are lightweight, and thus a sufficient frictional force is not generated between the covering members 11 and the conveying device 21, and a force applied from the conveying device 21 is not sufficiently transmitted to the covering members 11. Therefore, even if the conveying device 21 is driven, slipping occurs between the covering members 11 and the conveying device 21, and thus the conveying device 21 cannot convey the covering members 11. The same can occur immediately after the start of supply of the gypsum slurry 14 as illustrated in FIGS. 1B and 1C. Specifically, until a region receiving supply of the gypsum slurry 14 has a sufficient length and thus the gypsum slurry molded body 17 has a sufficient weight, the covering members 11 and the gypsum slurry molded body 17 cannot be conveyed by the conveying device 21 alone in some cases.

Therefore, the gypsum plate manufacturing device of the present embodiment may include the pressing devices 20.

The pressing devices 20 each include a pressing member 201 and a driving device 202 configured to change the distance between the pressing member 201 and the covering member 11, like in pressing devices 20A illustrated in FIGS. 1A to 1D and FIG. 2A.

The pressing member 201 is configured to contact one or more members selected from the covering members 11 being conveyed by the conveying devices 21, i.e., the first gypsum board base sheet 111 and the second gypsum board base sheet 112, and press the covering members 11 against the conveying devices 21.

### (Pressing Member)

No particular limitation is imposed on the pressing member 201 included in the pressing device 20 as long as the pressing member 201 is a member configured to, upon being pressed against the covering members 11, press the covering members 11 against the conveying device 21 without inhibiting the conveyance of the covering members 11. As illustrated in FIGS. 1A to 1D, FIG. 2A, and the like, the pressing member 201 included in the pressing device 20 is preferably a member configured to rotate in accordance with conveyance of the covering members 11. Therefore, the pressing member 201 preferably has a circular cross-sectional shape in an XZ plane, which is a plane perpendicular to the upper surface of the covering members 11 and along the conveying direction of the covering members 11, i.e., a plane perpendicular to the Y axis. The upper surface of the covering members 11 means a surface contacted by the pressing member 201. Also, the cross-sectional shape of the pressing member 201 means the outer shape of the pressing member 201. Examples of the pressing member 201 include, for example, various rollers and tires.

When the pressing member 201 is a tire, e.g., an air tire, it is preferable to readily adjust the magnitude or the like of a force of the pressing member 201 to press the covering members 11 against the conveying device 21 based on the amount, pressure, or the like of air to be charged into the air tire.

When the pressing member 201 is a tire, the air pressure of the tire is preferably 0.01 MPa or more and 0.5 MPa or less.

As illustrated in FIG. 2A, a roller 213A of the conveying device 21 is preferably disposed below a point at which the pressing member 201 of the pressing device 20 contacts the covering member 11. That is, the roller 213A is preferably disposed to sandwich the covering members 11 between the pressing member 201 and the roller 213A. Preferably, the roller 213A, disposed below the point at which the pressing member 201 of the pressing device 20 contacts the covering member 11, has an outer diameter larger than the outer diameters of other rollers 213, and is configured to support a load applied by the pressing device 20 through the covering members 11.

In place of the roller 213A, the conveying device 21 may include a roller 213B that is displaced, upstream or downstream along the conveying direction of the covering members 11, from below the point at which the pressing member 201 of the pressing device 20 contacts the covering member 11. When the conveying device 21 includes the roller 213B, upon the covering member 11 being pressed against the conveying device 21 by the pressing device 20, the belt 212 goes downward to enable an increase in adhesion between the covering member 11 and the conveying device 21. The roller 213B may have an outer diameter or the like different from the outer diameters of the other rollers 213.

### (Driving Device)

The driving device 202 may be any device as long as the driving device 202 is configured to change a distance L (see FIG. 1D) between the pressing member 201 and the covering member 11, and is configured to, as illustrated in FIGS. 1A to 1D, press the pressing member 201 against the covering member 11 or separate the pressing member 201 from the covering member 11.

The driving device 202 may include, for example, an air cylinder or an oil cylinder (hydraulic cylinder).

The driving device 202 is configured to, for example, move the pressing member 201 along the Z axis illustrated in FIGS. 1A to 1D and along a double-sided arrow A in FIG. 2A. When the driving device 202 is an air cylinder or the like, the pressing member 201 is attached to a rod 2021 of the driving device 202 as illustrated in FIG. 2A, and the rod 2021 is stretched along the double-sided arrow A to enable a change in the distance between the pressing member 201 and the covering member 11.

Although FIG. 2A illustrates an example in which the pressing member 201 is directly attached to the rod 2021, such a configuration is by no means a limitation. The rod 2021 and the pressing member 201 can be connected via various frames. Also, if necessary, a damper or the like configured to absorb an impact can be disposed between the pressing member 201 and the rod 2021.

### (Other Configuration Examples of Pressing Device)

The pressing device 20 is not limited to the configuration of the pressing device 20A illustrated in FIGS. 1A to 1D and FIG. 2A.

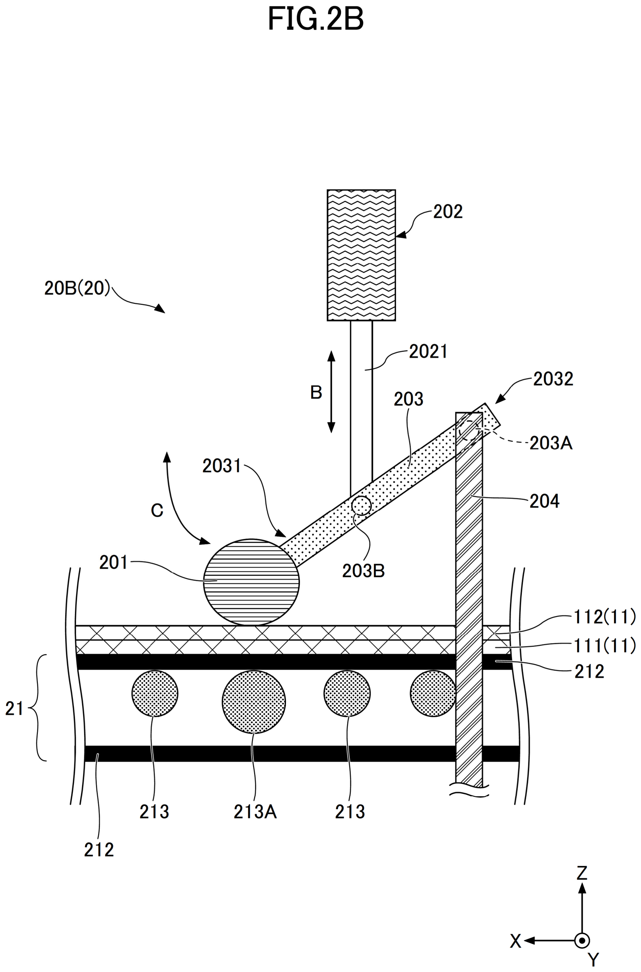

For example, as in a pressing device 20B illustrated in FIG. 2B, the pressing device 20 can include a frame 203 in addition to the pressing member 201 and the driving device 202.

No particular limitation is imposed on the shape of the frame 203, but the frame 203 can be formed into a rod-shaped body, a plate-shaped body, or the like, and the pressing member 201 can be attached to a first end 2031 of the frame 203. Also, it is possible to provide a fulcrum 203A that serves as the center of rotation when a force is applied by the driving device 202 to the frame 203 at a second end 2032 of the frame 203. The fulcrum 203A can be formed, for example, by fixing the frame 203 to a support 204 to be rotatable about the fulcrum 203A.

The driving device 202 can apply a force to move the frame 203 upward or downward as indicated by a double-sided arrow B at any position of the frame 203. At a point of load 203B at which the driving device 202 applies a force to the frame 203, the rod 2021 of the driving device 202 can be connected to the frame 203 so as not to inhibit the movement of the frame 203 caused by application of the force to the frame 203.

With the above configuration, when an upward or downward force as indicated by the double-sided arrow B is applied to the frame 203 by the driving device 202, the frame 203 can rotate, as indicated by a double-sided arrow C, about the fulcrum 203A, which is provided at the second end 2032 and serves as the center of rotation. Therefore, it is possible to change the distance between the pressing member 201 and the covering member 11.

By, for example, rotating the frame 203 about the fulcrum 203A provided at the second end 2032 of the frame 203 and changing the position of the pressing member 201 provided at the first end 2031 of the frame 203, an impact generated upon contact of the pressing member 201 with the covering member 11 becomes readily controllable. Therefore, it is possible to suppress possible damage or the like to the covering member 11, and stably convey the covering member 11.

### (Resistance Applying Device)

The pressing device 20 can include any other member.

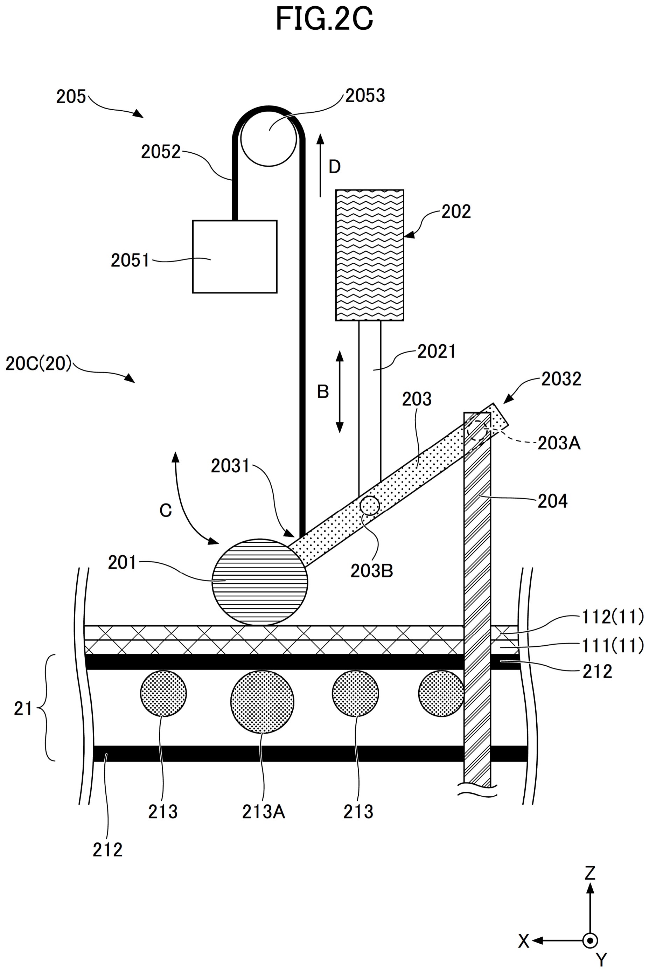

The pressing device 20 can also include a resistance applying device 205 configured to apply a force in a direction in which the pressing member 201 is away from the covering member 11, like in, for example, a pressing device 20C illustrated in FIG. 2C.

No particular limitation is imposed on the configuration of the resistance applying device 205. For example, the resistance applying device 205 can include a weight 2051, a connecting member 2052, such as a string, a rope, a chain, a wire, or the like, configured to connect the weight 2051 to the frame 203, and a pulley 2053 configured to adjust the direction of the force applied to the frame 203. By connecting the weight 2051 and the frame 203 to both ends of the connecting member 2052 and hanging the connecting member 2052 around the pulley 2053, it is possible to apply an upward force to the frame 203 as indicated by an arrow D.

The configuration of the resistance applying device 205 is not limited to the example illustrated in FIG. 2C. In another possible configuration, one end of an elastic member, such as a spring or the like, is connected to the vicinity of the first end 2031 of the frame 203, and the other end is connected to a support member disposed above the frame 203.

By the provision of the resistance applying device 205, the pressing member 201 cannot approach the covering member 11 unless the driving device 202 applies a force having a predetermined magnitude or more. Therefore, it is possible to prevent the pressing member 201 from unexpectedly approaching and contacting the covering member 11, for example, due to a failure of the driving device 202.

The resistance applying device 205 can be provided at the pressing device 20A illustrated in FIG. 2A. In this case, the resistance applying device 205 can be attached to the rod 2021 or the like.

### (2-3-2) Disposition of Pressing Device

No particular limitation is imposed on the disposition of the pressing device 20. The pressing device 20 can be disposed at a place where a frictional force can be applied between the covering member 11 and the conveying device 21 such that the conveying device 21 can convey the covering member 11 even before supply of a gypsum slurry. Also, the pressing device 20 can be disposed at such a place in a sufficient number for applying a frictional force required to convey the covering member 11.

In accordance with the length and layout of the production line of the gypsum plate manufacturing device 10, the manufacturing speed of the gypsum plate manufacturing device 10, the weight of the gypsum slurry 14 disposed on the covering member 11, and the like, an appropriate number of the pressing devices 20 are preferably disposed at appropriate positions on the production line such that the conveying device 21 can convey the covering member 11.

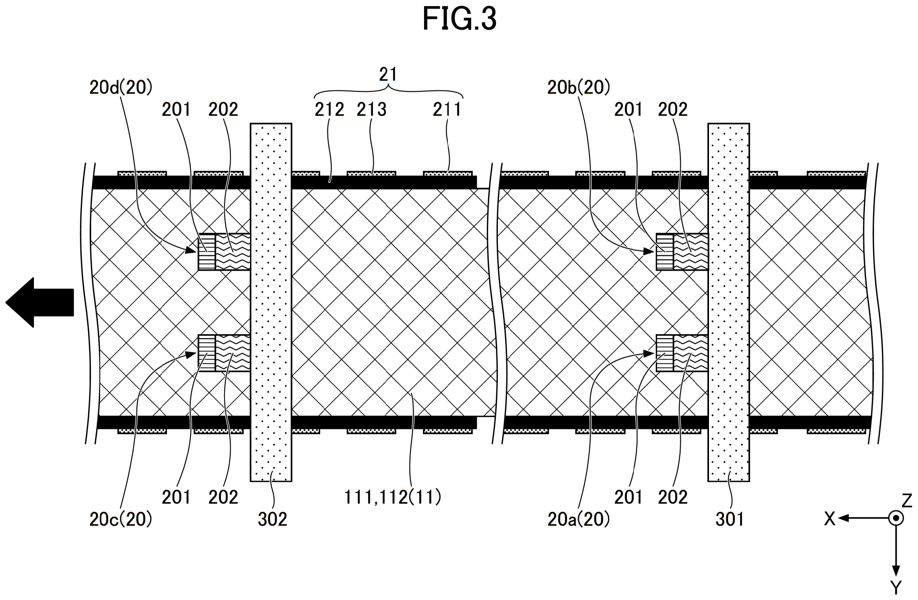

For example, a plurality of the pressing devices 20 can be disposed along the width of the covering member 11 conveyed by the conveying device 21, i.e., along the Y axis, like a combination of pressing devices 20a and 20b and a combination of pressing devices 20c and 20d illustrated in FIG. 3.

By disposing the plurality of the pressing devices 20 along the width of the covering member 11, it is possible to suppress a difference in the magnitude of the frictional force between the covering member 11 and the conveying device 21 from position to position in the width direction of the covering member 11, and thus suppress meandering or the like of the covering member 11.

As illustrated in FIG. 3, the pressing devices 20 can be fixed, for example, to supports 301 and 302 disposed along the width of the covering member 11.

Although FIG. 3 illustrates an example in which the two pressing devices 20 (20a and 20b or 20c and 20d) are disposed along the width of the covering member 11, such a configuration is by no means a limitation. The single pressing device 20 or the three or more pressing devices 20 can be disposed.

Also, as illustrated in FIGS. 1A to 1D, and like the pressing devices 20a to 20d illustrated in FIG. 3, the plurality of the pressing devices 20 can be disposed along the conveying direction of the covering member 11 in the conveying device 21, i.e., along the X axis in FIGS. 1A to 1D and FIG. 3. The covering member 11 is conveyed in the direction indicated by a block arrow in FIG. 3.

By providing the plurality of the pressing devices 20 along the conveying direction of the covering member 11, it is possible to readily convey the covering member 11 over the entire conveying path on which the covering member 11 is to be conveyed when manufacturing gypsum plates.

No particular limitation is imposed on a region where the pressing device 20 is disposed. The pressing device 20 is preferably disposed between the molding device 16 and a rough cutting device 22, which will be described below. Cutting of the gypsum slurry molded body 17 is typically performed after sufficient progress of curing of the gypsum slurry. Therefore, the distance between the molding device 16 and the rough cutting device 22 is selected to achieve sufficient progress of curing of the gypsum slurry 14 contained in the gypsum slurry molded body 17 being conveyed. Therefore, by providing the pressing device 20 in the above interval, it is possible to readily convey and dispose the covering member 11 over the entire conveying path of the covering member 11 in the gypsum plate manufacturing device 10 even before supply of a gypsum slurry, which is preferable.

The pressing device 20 is particularly preferably disposed between the molding device 16 and a location 23 in FIGS. 1A to 1D.

The location 23 is a location away from the molding device 16 by 1/2 of a distance L1 between the molding device 16 and the rough cutting device 22. That is, a distance L2 between the molding device 16 and the location 23 has a relationship: L2=L1÷2.

The distance L1 means a distance from the outlet of the molding device 16 to a point at which cutting is performed by the rough cutting device 22. The distance L2 means a distance from the outlet of the molding device 16 to the location 23. The position of the pressing device 20 means a position at which the pressing member 201 of the pressing device 20 contacts the covering member 11.

As illustrated in FIG. 1A, when manufacturing of a gypsum plate is started, conveyance of the covering members 11 is started. At this time, the covering members 11 alone are conveyed, and a gypsum slurry or the like is not supplied, as illustrated in FIG. 1A.

Next, supply of water alone to the mixer 12 is started. Here, a point on the covering member 11 to which water alone is supplied for the first time is referred to as a water supply starting point 11A (see FIGS. 1B and 1C).

Subsequently, supply of raw materials of a gypsum slurry, such as calcined gypsum and the like, to the mixer 12, and kneading of the raw materials are started.

Then, as illustrated in FIGS. 1B and 1C, supply of the gypsum slurry 14 onto the covering member 11 is started. Here, a point on the covering member 11 to which the gypsum slurry 14 is supplied for the first time is referred to as a slurry supply starting point 11B. As time passes from the start of the supply of the gypsum slurry 14, as illustrated in FIGS. 1B to 1D, a region downstream of the molding device 16 where the gypsum slurry 14 is supplied, i.e., a region within the confines of the gypsum slurry molded body 17, becomes longer.

As the region of the gypsum slurry molded body 17 becomes longer, a force, applied to the covering member 11 downstream of the molding device 16, to convey the covering member 11 in the conveying direction becomes greater than the sum of forces to inhibit the conveyance of the covering member 11 applied to the covering member 11 upstream of the molding device 16.

Therefore, even if the pressure applied by the pressing device 20 is released, the conveying device 21 can convey the covering member 11 and the gypsum slurry molded body 17. That is, even if the pressing device 20 does not press the covering member 11 against the conveying device 21, the conveying device 21 can convey the covering member 11.

Examples of the forces to inhibit the conveyance of the covering member 11 applied to the covering member 11 upstream of the molding device 16 include, for example, a tensile force applied to the covering member 11 on the conveying path, a reaction force caused by a roller around which the covering member 11 is wound, and a frictional force between the covering member 11 and a processing device configured to perform bending or the like of the covering member 11, a member that contacts the covering member 11 on the conveying path, or the like.

Examples of the force, applied to the covering member 11 downstream of the molding device 16, to convey the covering member 11 in the conveying direction include, for example, a force transmitted from the conveying device 21 to convey the covering member 11 and the gypsum slurry molded body 17. When the gypsum slurry 14 is not supplied in a sufficient amount, and the covering member 11 and the gypsum slurry molded body 17 are not sufficiently heavy, a sufficient magnitude of a frictional force is not applied between the conveying device 21 and the covering member 11, and as a result a sufficient magnitude of a force cannot be transmitted from the conveying device 21 to the covering member 11 or the like.

According to the studies conducted by the inventor of the present invention, when the pressing device 20 is disposed in a region from the outlet of the molding device 16 to the location 23 as described above, the covering member 11 can be conveyed by the conveying device 21 even before supply of the gypsum slurry 14.

When the gypsum plate manufacturing device 10 of the present embodiment includes the plurality of the pressing devices 20, all the pressing devices 20 are preferably disposed between the molding device 16 and the rough cutting device 22, and more preferably disposed between the molding device 16 and the location 23.

The molding device 16 and the rough cutting device 22, which will be described below, can be sequentially disposed along the conveying direction of the covering member 11 downstream, in the conveying direction of the covering member 11 in the conveying device 21, of a location 141 where the gypsum slurry is supplied onto the covering member 11 from the mixer 12.

As described below, the molding device 16 can mold the covering member 11 and the gypsum slurry 14 to form the gypsum slurry molded body 17.

The rough cutting device 22 can roughly cut the gypsum slurry molded body 17. The rough cutting device 22 is a device configured to cut the gypsum slurry molded body 17, and thus can also be referred to as a cutting device. The gypsum plate manufacturing device 10 may include a plurality of the cutting devices. The rough cutting device 22 means the cutting device for the gypsum slurry molded body 17 that is disposed the most upstream along the conveying direction of the gypsum slurry molded body 17.

### (2-4) Control Device

As illustrated in FIGS. 1A to 1D, the gypsum plate manufacturing device 10 of the present embodiment may include a control device 18 configured to control the pressing device 20 and the like.

The control device 18 is configured to control the driving device 202 to change the distance between the pressing member 201 and the covering member 11. The control device 18 is configured to switch between a pressing state, in which the pressing member 201 presses the covering member 11 against the conveying device 21, and a separating state, in which the pressing member 201 is separated from the covering member 11.

Then, the control device 18 can set the pressing state in response to the conveying device 21 starting conveyance of the covering members 11, and subsequently switch from the pressing state to the separating state.

By the above control performed by the control device 18, the covering member 11 can be conveyed by the conveying device 21 even before supply of the gypsum slurry 14.

As described above, when manufacturing of a gypsum plate is started, conveyance of the covering members 11 is started, and then supply of water alone to the mixer 12 is started. Subsequently, supply of raw materials of a gypsum slurry, such as calcined gypsum and the like, to the mixer 12, and kneading of the raw materials are started. As a result, supply of the gypsum slurry onto the covering member 11 is started.

For preventing clogging in the mixer 12 and the tube for supply of the gypsum slurry 14, water alone is supplied to the mixer 12 before supply of the calcined gypsum and the like, as described above. The water supplied to the mixer 12 is supplied onto the covering member 11 before supply of the gypsum slurry. As described above, the point to which water alone is supplied for the first time is referred to as the water supply starting point 11A.

Subsequently, as illustrated in FIGS. 1B and 1C, supply of the gypsum slurry 14 onto the covering member 11 is started. As described above, at this time, the point to which the gypsum slurry 14 is supplied for the first time is referred to as the slurry supply starting point 11B.

No particular limitation is imposed on the timing at which the control device 18 switches from the pressing state to the separating state. For example, the control device 18 preferably switches from the pressing state to the separating state during a period before a portion of the covering member 11 where the gypsum slurry 14 supplied from the mixer 12 is disposed reaches a location (position) where the pressing device 20 is disposed. That is, the control device 18 preferably switches from the pressing state to the separating state during a period before the slurry supply starting point 11B reaches a location where the pressing device 20 is disposed.

When the pressing state is continued even after the portion of the covering member 11 where the gypsum slurry 14 supplied from the mixer 12 is disposed has reached the location where the pressing device 20 is disposed, the gypsum slurry 14 may overflow from the covering member 11 due to the pressing force applied by the pressing member 201.

When the gypsum slurry 14 overflows from the covering member 11, the gypsum slurry 14 overflowing from the covering member 11 adheres to the belt 212, the pulley 211, and the roller 213, and as a result the belt 212 and the pulley 211 may cause slipping. Also, in some cases, the gypsum slurry 14 adhering to the belt 212 adheres to the covering member 11 of succeeding products, or the gypsum slurry adhering to the belt 212 is hardened to cause dents, streaks, and the like in succeeding products.

When the control device 18 switches from the pressing state to the separating state during a period before the portion of the covering member 11 where the gypsum slurry 14 supplied from the mixer 12 is disposed reaches the location where the pressing device 20 is disposed, it is possible to prevent the gypsum slurry from overflowing from the covering member 11. This can prevent, for example, the above slipping, and adhesion of the gypsum slurry 14 to succeeding products due to the gypsum slurry 14 adhering to the belt 212.

Also, when the water supply starting point 11A and a portion of the covering member 11 where succeeding water alone is disposed have reached a portion where the covering member 11 is pressed against the conveying device 21 by the pressing member 201, the water may overflow from the covering member 11, for example, due to the pressing pressure applied by the pressing member 201. When the water overflows from the covering member 11, the belt 212, the pulley 211, and the roller 213 become wet. This may cause slipping between the belt 212 and the pulley 211. Also, this may cause the succeeding covering member 11 to stick to the belt 212 and fall between the conveying devices 21, and may damage the covering member 11. In addition, the succeeding covering member 11 may become wet, and this may cause the surface of the covering member 11 of the product to wrinkle. Therefore, more preferably, the control device 18 switches from the pressing state to the separating state during a period before the portion of the covering member 11 where water alone supplied from the mixer 12 is disposed reaches the location (position) where the pressing device 20 is disposed.

The portion of the covering member 11 where water alone supplied from the mixer 12 is disposed means, as described above, a portion of the covering member 11 where water alone is supplied via the mixer 12 by supplying water alone to the mixer 12 prior to the start of preparation of a gypsum slurry in the mixer 12. That is, the portion of the covering member 11 where water alone supplied from the mixer 12 is disposed means a region between the water supply starting point 11A and the slurry supply starting point 11B illustrated in FIGS. 1B and 1C. Therefore, more preferably, the control device 18 switches from the pressing state to the separating state during a period before the water supply starting point 11A reaches the location where the pressing device 20 is disposed.

Because supply of water alone from the mixer 12 is followed by continuous supply of the gypsum slurry from the mixer 12, the control device 18 preferably continues the separating state of the pressing device 20 after setting the pressing device 20 to be in the separating state, in both the above cases.

When the gypsum plate manufacturing device 10 includes the plurality of the pressing devices 20 along the conveying path of the covering member 11, the control device 18 can select the timing for switching from the pressing state to the separating state for each of the pressing devices 20.

As described above, the pressing device 20 is preferably switched from the pressing state to the separating state during a period before the slurry supply starting point 11B reaches the location where the pressing device 20 is disposed. In this case, preferably, the pressing device 20 is set to be in the pressing state until the time immediately before the slurry supply starting point 11B reaches the location where the pressing device 20 is disposed, i.e., the pressing device 20 continues to press the covering member 11 against the conveying device 21 until that time.

Also, more preferably, the pressing device 20 is switched from the pressing state to the separating state during a period before the water supply starting point 11A reaches the location where the pressing device 20 is disposed. In this case, preferably, the pressing device 20 is set to be in the pressing state until the time immediately before the water supply starting point 11A reaches the location where the pressing device 20 is disposed, i.e., the pressing device 20 continues to press the covering member 11 against the conveying device 21 until that time.

The arrival time of the water supply starting point 11A or the slurry supply starting point 11B at the location where the pressing device 20 is disposed is varied with the manufacturing speed (conveying speed). Therefore, preferably, in accordance with, for example, the arrival time of the water supply starting point 11A or the like at the location where the pressing device 20 is disposed, the control device 18 adjusts and selects the timing for switching the pressing device 20 from the pressing state to the separating state. Also, preferably, in accordance with the time from the start of supply of water alone until the start of supply of the gypsum slurry, the supply speed of the gypsum slurry, and the like, the disposition or the like of the pressing device 20 is adjusted such that the conveying device 21 can convey the covering member 11, for example, by the weight of the gypsum slurry disposed on the covering member 11.

For example, as illustrated in FIG. 1A, after the start of conveyance of the covering member 11 yet before the start of supply of water or a gypsum slurry, all the pressing devices 20 disposed on the conveying path of the covering member 11 can be set to be in the pressing state, i.e., a state in which the pressing members 201 press the covering member 11 against the conveying device 21.

Next, as illustrated in FIGS. 1B and 1C, supply of water alone onto the covering member 11 is started, and then supply of the gypsum slurry 14 is started. The time passing from the start of supply of the gypsum slurry is longer in FIG. 1C than in FIG. 1B. Thus, in FIG. 1C, a region where the gypsum slurry 14 is supplied, i.e., a region within the confines of the gypsum slurry molded body 17, is long. As illustrated in FIGS. 1B and 1C, the water supply starting point 11A and the slurry supply starting point 11B move downstream on the conveying path of the covering member 11.

In FIG. 1B, only one of the pressing devices 20 disposed the most upstream along the conveying path of the covering member 11, approached by the water supply starting point 11A, is set to be in the separating state.

In FIG. 1C, only three of the pressing devices 20 from upstream along the conveying path of the covering member 11, passed through by the water supply starting point 11A, are set to be in the separating state.

Subsequently, as illustrated in FIG. 1D, in a state in which the manufacturing of the gypsum plate reaches a steady state, i.e., the gypsum plate is continuously manufactured, all the pressing devices 20 are set to be in the separating state, and then continue to be in the separating state.

For example, it may be configured to detect a signal (command) for supplying water to the mixer 12 or a signal (command) for supplying the raw materials of the gypsum slurry to the mixer 12 as the timing when water or the gypsum slurry is supplied to the covering member 11. In this case, for example, in accordance with the detected timing when water or the gypsum slurry is supplied to the covering member 11, and the conveying speed of the covering member 11 by the conveying device 21 or the like, it is possible to calculate the timing when the water supply starting point 11A or the slurry supply starting point 11B of the covering member 11 reaches the location where the pressing device 20 is disposed. The control device 18 can control the pressing device 20 according to the calculated timing.

If necessary, it may be configured to detect the rotation speed of the pulley 211 or the like of the conveying device 21, the conveying speed of the covering member 11, and the like, thereby measuring and calculating the conveying speed of the covering member 11 by the conveying device 21 or the like. Alternatively, a communication line may be provided between the control device 18 and the mixer 12 to notify the control device 18 of the timing when water or the gypsum slurry is supplied from the mixer 12 to the covering member 11.

The gypsum plate manufacturing device 10 of the present embodiment can also include a detecting device 19 (see FIGS. 1A to 1D) configured to detect that the water supply starting point 11A or the slurry supply starting point 11B of the covering member 11 has reached the location where the pressing device 20 is disposed. No particular limitation is imposed on the disposition and configuration of the detecting device 19.

The detecting device 19 can be disposed, for example, at the outlet of a conduit 13 of the mixer 12, or at any place on the conveying path of the covering member 11, e.g., at a position that is upstream of the pressing device 20 on the conveying path of the covering member 11, and next to the pressing device 20.

Also, the detecting device 19 may be a photographing device configured to photograph an image of the surface of the covering member 11, and may be configured to detect the following points and portions of the covering member 11 from the photographed image, i.e., the water supply starting point 11A, the slurry supply starting point 11B, the portion where water alone is disposed, and the portion where the gypsum slurry is disposed. The detecting device 19 may be configured to detect the following points and portions of the covering member 11 by means of various sensors, i.e., the water supply starting point 11A, the slurry supply starting point 11B, the portion where water alone is disposed, and the portion where the gypsum slurry is disposed. The detecting device 19 may include a plurality of types of detecting devices in accordance with the detection targets, such as a water detecting device configured to detect water and a gypsum slurry detecting device configured to detect a gypsum slurry.

The control device 18 can include a CPU, which is an arithmetic processing unit configured to perform arithmetic operations necessary for control, a RAM and a ROM, which are main storage devices, an auxiliary storage device, an input/output interface, a display device, which is an output device, and the like. The CPU, the main storage device, the auxiliary storage device, the input/output interface, and the output device included in the control device 18 can be connected to each other through a bus. It is not necessary for all the above members included in the control device 18 to be housed in the same housing. For example, the auxiliary storage device and the display device may be provided externally. The auxiliary storage device is a storage device, such as an SSD, an HDD, or the like.

The CPU is an abbreviation of Central Processing Unit, the RAM is an abbreviation of Random Access Memory, and the ROM is an abbreviation of Read Only Memory. The SSD is an abbreviation of Solid State Drive and the HDD is an abbreviation of Hard Disk Drive.

The input/output interface is, for example, a wired or wireless interface for exchanging of a signal (command) for supplying water or a signal (command) for supplying raw materials for the gypsum slurry, data detected by the detecting device 19, a level of control performed in the driving device 202, and the like.

Also, the input/output interface is, for example, a user interface, such as a touch panel, a keyboard, or an operation button configured to select conditions of control.

The control device 18 can be formed by a personal computer (PC) or the like. Therefore, the above components included in the control device 18 may be implemented by cooperation of software and hardware, i.e., by an information processing device, such as a personal computer or the like, in which the CPU executes a program previously stored in the main storage device or the like.

### (2-5) Molding Device

As illustrated in FIGS. 1A to 1D, the gypsum plate manufacturing device 10 of the present embodiment may include the molding device 16.

The first gypsum board base sheet 111 and the second gypsum board base sheet 112 being conveyed in the gypsum plate manufacturing device 10 reach the molding device 16. Here, the gypsum slurry 14 is supplied from the mixer 12 through the conduit 13 between the first gypsum board base sheet 111 and the second gypsum board base sheet 112. Thus, between the first gypsum board base sheet 111 and the second gypsum board base sheet 112, a continuous laminate in which a layer formed of the gypsum slurry 14 is disposed can be formed.

Specifically, for example, the gypsum slurry 14 adjusted to have a predetermined density is supplied and deposited over the first gypsum board base sheet 111 being conveyed continuously. Then, both the widthwise ends of the first gypsum board base sheet 111 are folded along respective predetermined carved lines to extend upward and then extent inward, thereby partially wrapping a deposited layer of the gypsum slurry 14. Subsequently, the second gypsum board base sheet 112 being conveyed at the same speed can be overlaid on the deposited layer of the gypsum slurry 14 partially wrapped by the first gypsum board base sheet 111. Next, the resulting product is allowed, for molding, to pass through the molding device 16 configured to determine the thickness and width of the gypsum plate. Through the above procedure, the gypsum plate can be molded. In this case, between the first gypsum board base sheet 111 and the second gypsum board base sheet 112, a layer of the gypsum slurry having the same density is formed. Note that such a form is by no means a limitation, and layers of gypsum slurries having different densities may be formed.

In this manner, the molding device 16 of the gypsum plate manufacturing device 10 can perform a molding step of molding the gypsum slurry, thereby manufacturing the gypsum slurry molded body 17.

### (2-6) Rough Cutting Device, Dryer, and Cutting Device

If necessary, the gypsum plate manufacturing device 10 of the present embodiment can include, for example, the rough cutting device 22, a dryer (not shown), the cutting device, and the like, downstream of the molding device 16.

The dryer is configured to reduce excess moisture in the gypsum slurry molded body.

Also, the rough cutting device 22 is configured to roughly cut the produced gypsum slurry molded body 17 to a desired size. In FIGS. 1A to 1D, a rotary cutter is illustrated as the rough cutting device 22.

The rough cutting device 22 illustrated in FIGS. 1A to 1D includes an upper cutter 22A and a lower cutter 22B. The upper cutter 22A and the lower cutter 22B include rotary rolls 221A and 221B and blades 222A and 222B attached to the rotary rolls 221A and 221B, and can roughly cut the gypsum slurry molded body 17 or the like through rotation in directions indicated by arrows in FIG. 1D.

However, the configuration of the rough cutting device 22 is not limited to the above form.

Preferably, the rough cutting device 22 is operated after the start of supply of the gypsum slurry 14 and then the gypsum slurry molded body 17 has passed through a cutting position of the rough cutting device 22. That is, preferably, the rough cutting device 22 starts its operation after the slurry supply starting point 11B has passed through the rough cutting device 22. Therefore, the operation of the rough cutting device 22 can be stopped while the covering member 11 alone is passing through the cutting position of the rough cutting device 22. Then, a portion where the covering member 11 alone is laminated, which is formed at the time of start of manufacturing of the gypsum plate, can be cut along with the portion including the gypsum slurry molded body 17 by the rough cutting device 22, and can be removed from the production line.

If necessary, the gypsum plate manufacturing device 10 can include the one or more rough cutting devices 22 and the one or more cutting devices. For example, the gypsum plate manufacturing device 10 can include a first cutting device (the rough cutting device 22) configured to roughly cut the produced gypsum slurry molded body 17 or gypsum plate for placing them in the dryer. Also, the gypsum plate manufacturing device 10 can include a second cutting device (the cutting device) configured to cut the gypsum plate according to the size of a final product.

### [Gypsum Plate Manufacturing Method]

The gypsum plate manufacturing method of the present embodiment is a method for manufacturing a gypsum plate in which at least the upper surface and the lower surface of a gypsum core are covered by a covering member. The gypsum plate manufacturing method can include a covering member conveying step and a gypsum slurry supplying step, which will be described below.

The gypsum plate manufacturing method of the present embodiment can be performed using the above-described gypsum plate manufacturing device. Therefore, the description of the matters already described will be omitted.

In the covering member conveying step, the covering member 11 can be conveyed by the conveying device 21.

In the gypsum slurry supplying step, the gypsum slurry 14 including calcined gypsum and water, prepared by the mixer 12, can be supplied onto the covering member 11.

After the start of the covering member conveying step, the gypsum slurry supplying step can be started. After the start of the covering member conveying step, water alone is supplied to the mixer 12 before the start of the gypsum slurry supplying step. Then, supply of raw materials of a gypsum slurry, such as calcined gypsum and the like, to the mixer 12, and kneading of the raw materials are started. Subsequently, supply of the gypsum slurry onto the covering member 11, i.e., the gypsum slurry supplying step, is started.

In the gypsum plate manufacturing method of the present embodiment, at the time of start of the covering member conveying step, the pressing member 201 of the pressing device 20 can be set in the pressing state, in which the pressing member 201 presses the covering member 11 against the conveying device 21. Subsequently, the pressing member 201 included in the pressing device 20 can be set in the separating state, in which the pressing member 201 is separated from the covering member 11.

As described above, the pressing device 20 includes the pressing member 201 configured to press the covering member 11, being conveyed by the conveying device 21, against the conveying device 21, and the driving device 202 configured to change the distance between the pressing member 201 and the covering member 11.

The gypsum plate manufacturing method of the present embodiment can continue the covering member conveying step and the gypsum slurry supplying step after the start of each step. A step of setting the pressing state, in which the pressing member 201 included in the pressing device 20 presses the covering member 11 against the conveying device 21, is defined as a pressing step. A step of setting the separating state, in which the pressing member 201 included in the pressing device 20 is separated from the covering member, is defined as a separating step. In this case, it is possible to continue the pressing step from the start of the covering member conveying step to a predetermined timing. At the end of the pressing step, the separating step can be performed.

No particular limitation is imposed on the timing for ending the pressing step and starting the separating step. It is possible to switch from the pressing step to the separating step at any timing.

For example, it is preferable to switch the pressing device 20 from the pressing step to the separating step during a period before, after the start of the gypsum slurry supplying step, the portion of the covering member 11 where the gypsum slurry supplied from the mixer 12 is disposed reaches the location where the pressing device 20 is disposed.

That is, it is preferable to end the pressing step and start the separating step during a period before the slurry supply starting point 11B of the covering member 11 reaches the location where the pressing device 20 is disposed. After the separating step is started, the separating step can be continued.

As described above, before the start of the gypsum slurry supplying step, water alone is supplied to the mixer 12, and the supplied water is supplied onto the covering member 11. That is, the gypsum plate manufacturing method of the present embodiment may include a water supplying step of supplying water alone to the covering member 11 from the mixer 12 before the start of the gypsum slurry supplying step.

In this case, it is preferable to switch the pressing device 20 from the pressing step to the separating step during a period before, after the start of the water supplying step, the portion of the covering member 11 where water alone supplied from the mixer 12 is disposed reaches the location where the pressing device 20 is disposed. That is, it is possible to end the pressing step and start the separating step during a period before the water supply starting point 11A of the covering member 11 reaches the location where the pressing device 20 is disposed. After the separating step is started, the separating step can be continued.

When the gypsum plate manufacturing device 10 includes a plurality of the pressing devices 20 along the conveying path of the covering member 11, it is possible to select the timing for switching each of the pressing devices 20 from the pressing state to the separating state, i.e., the timing for ending the pressing step and performing the separating step for each of the pressing devices 20.

In accordance with the length and layout of the production line of the gypsum plate manufacturing device 10, the manufacturing speed of the gypsum plate manufacturing device 10, the weight of the gypsum slurry 14 disposed on the covering member 11, and the like, an appropriate number of the pressing devices 20 are preferably disposed at appropriate positions on the production line such that the conveying device 21 can convey the covering member 11. Preferably, the pressing device 20 is set to be in the pressing state until the time immediately before the slurry supply starting point 11B reaches the location where the pressing device 20 is disposed, i.e., the pressing device 20 continues to press the covering member 11 against the conveying device 21 until that time. More preferably, the pressing device 20 is set to be in the pressing state until the time immediately before the water supply starting point 11A reaches the location where the pressing device 20 is disposed, i.e., the pressing device 20 continues to press the covering member 11 against the conveying device 21 until that time. Therefore, it is preferable to adjust the disposition of the pressing device 20 in accordance with the time from the start of supply of water alone from the mixer 12 until the start of supply of the gypsum slurry, the supply speed of the gypsum slurry, or the like.

The gypsum plate manufacturing method of the present embodiment may further include the following gypsum slurry preparation step, molding step, curing step, rough cutting step, drying step, and the like, in addition to the covering member conveying step and the gypsum slurry supplying step.

In the gypsum slurry preparation step, a gypsum slurry can be prepared by kneading calcined gypsum, serving as a raw material of the gypsum slurry, water, and optionally, various additives, and foams.

In the molding step, the gypsum slurry can be molded into a plate shape.

In the curing step, the gypsum slurry molded body obtained in the molding step can be cured.

In the rough cutting step, the gypsum slurry molded body can be roughly cut by the rough cutting device.

In the drying step, the gypsum slurry molded body can be dried.

In the cutting step, the gypsum plate can be cut by the cutting device.

Each of the steps will be described taking, as an example, a case in which a gypsum plate to be manufactured is a gypsum board.

### (Gypsum Slurry Preparation Step)

In the gypsum slurry preparation step, a gypsum slurry can be prepared by kneading calcined gypsum, water, and optionally, foams, and various additives.

For example, the gypsum slurry can be prepared by kneading these raw material components with a mixer or the like, as described in the gypsum plate manufacturing device. The raw materials of the gypsum slurry are already described, and thus description of the raw materials is omitted here.

### (Molding Step)

In the molding step, the gypsum slurry obtained in the gypsum slurry preparation step can be molded into a plate shape. When a gypsum plate to be manufactured is a gypsum board, the gypsum slurry can be supplied between two gypsum board base sheets and molded into a plate shape in the molding step.

For example, the gypsum slurry 14 is prepared in the gypsum slurry preparation step. Then, in the molding step, a continuous laminate, in which a layer of the gypsum slurry 14 is disposed, can be formed between the first gypsum board base sheet 111 and the second gypsum board base sheet 112. Next, the resulting product is allowed to pass through the molding device 16 configured to determine the thickness of the gypsum plate, and thus can be formed into a plate shape to form the gypsum slurry molded body.

However, the above form is by no means a limitation. In the molding step, a gypsum slurry having a desired density can be supplied between gypsum board base sheets, and formed into a plate shape by a molding device.

### (Curing Step)

After the molding step, a curing step can be performed. The curing step is a step of curing the gypsum slurry molded body obtained in the molding step.

In the curing step, calcined gypsum (gypsum hemihydrate) in the gypsum slurry can form acicular crystals of gypsum dihydrate through hydration reaction, and can be set and solidified. Therefore, the curing step can be performed through reaction between the calcined gypsum, added to the gypsum slurry, and water in the gypsum slurry molded body formed in the molding step, and through progress of hydration reaction of the calcined gypsum.

### (Rough Cutting Step)

In the rough cutting step, the gypsum slurry molded body 17 can be cut by the rough cutting device 22.

After the formation of the gypsum slurry molded body 17 in the molding step, the gypsum slurry is gradually cured. Therefore, the rough cutting step can be performed, for example, partway of the curing step or at the end of the curing step. However, it is preferable to perform the rough cutting step after the curing step has progressed to the extent that the gypsum slurry molded body 17 can be roughly cut.

The cutting step can be performed a plurality of times. Therefore, the gypsum plate manufacturing method of the present embodiment can include, for example, a first cutting step, which can also be referred to as the rough cutting step. In the first cutting step, for example, the gypsum slurry molded body or the gypsum plate can be roughly cut to a desired size, for example, in accordance with the size of a dryer used in the drying step described below.

Also, a second cutting step (cutting step) can be performed, for example, after the drying step, and the gypsum plate can be cut to a desired product size.

### (Drying Step)

In the drying step, the gypsum slurry molded body 17 can be dried. In the drying step, excess moisture contained in the gypsum slurry molded body 17 can be dried. The gypsum slurry molded body obtained after the curing step can be supplied to the drying step. The drying step can be performed by forcibly drying the gypsum slurry molded body using a dryer.

No particular limitation is imposed on a method of forcibly drying the gypsum slurry molded body using a dryer. For example, a dryer is provided on the conveying path of the gypsum slurry molded body, and the gypsum slurry molded body is allowed to pass through the interior of the dryer, thereby enabling continuous drying of the gypsum slurry molded body. Also, the gypsum slurry molded bodies can be transferred into the dryer as batches, and dried for each of the batches.

According to the gypsum plate manufacturing method of the present embodiment described above, the conveying device can convey the covering member after the start of the covering member conveying step even before supply of the gypsum slurry.

### (Clauses)

(1) A gypsum plate manufacturing device according to one aspect of the present disclosure is a gypsum plate manufacturing device configured to manufacture a gypsum plate in which at least an upper surface and a lower surface of a gypsum core are covered by a covering member, the gypsum plate manufacturing device including:
   a conveying device configured to convey the covering member;
   a mixer configured to prepare a gypsum slurry containing calcined gypsum and water, and supply the gypsum slurry onto the covering member;
   a pressing device including a pressing member configured to press the covering member, being conveyed by the conveying device, against the conveying device, and a driving device configured to change a distance between the pressing member and the covering member; and
   a control device configured to control the driving device to
      change the distance between the pressing member and the covering member, and
      switch between a pressing state, in which the pressing member presses the covering member against the conveying device, and a separating state, in which the pressing member is separated from the covering member, wherein
   the control device sets the pressing state in response to the conveying device starting conveyance of the covering member, and subsequently switches from the pressing state to the separating state.
(2) In (1), the control device may switch from the pressing state to the separating state during a period before a portion of the covering member in which the gypsum slurry supplied from the mixer is disposed reaches a location where the pressing device is disposed.
(3) In (1) or (2), the control device may switch from the pressing state to the separating state during a period before a portion of the covering member in which water alone supplied from the mixer is disposed reaches a location where the pressing device is disposed.
(4) In any one of (1) to (3), a plurality of the pressing devices may be disposed along a width of the covering member conveyed by the conveying device.
(5) In any one of (1) to (4), a plurality of the pressing devices may be disposed along a conveying direction of the covering member in the conveying device.
(6) In any one of (1) to (5), the gypsum plate manufacturing device may further include:
   a molding device configured to mold the covering member and the gypsum slurry to form a gypsum slurry molded body; and
   a rough cutting device configured to roughly cut the gypsum slurry molded body,
   the molding device and the rough cutting device being sequentially provided along a conveying direction of the covering member and downstream, in the conveying direction of the covering member, of a location where the gypsum slurry is supplied onto the covering member from the mixer, wherein
   the pressing device may be disposed between the molding device and the rough cutting device.
(7) In (6), the pressing device may be disposed between the molding device and a location away from the molding device by 1/2 of a distance between the molding device and the rough cutting device.
(8) In any one of (1) to (7), the pressing device may include a resistance applying device configured to apply a force in a direction moving the pressing member away from the covering member.
(9) A gypsum plate manufacturing method according to one aspect of the present disclosure is a gypsum plate manufacturing method for manufacturing a gypsum plate in which at least an upper surface and a lower surface of a gypsum core are covered by a covering member, the gypsum plate manufacturing method including:
   a covering member conveying step of conveying the covering member by a conveying device; and
   a gypsum slurry supplying step of supplying a gypsum slurry onto the covering member, the gypsum slurry being prepared by a mixer and containing calcined gypsum and water, wherein
   a pressing state, in which a pressing member of a pressing device presses the covering member against the conveying device, is set at a time of start of the covering member conveying step, and a separating state, in which the pressing member is separated from the covering member, is set subsequently, and
   the pressing device includes
      the pressing member configured to press the covering member, being conveyed by the conveying device, against the conveying device, and
      a driving device configured to change a distance between the pressing member and the covering member.
(10) In (9), the pressing device may be switched from the pressing state to the separating state during a period before a portion of the covering member where the gypsum slurry supplied from the mixer is disposed reaches a location where the pressing device is disposed.
(11) In (9) or (10), the gypsum plate manufacturing method may include a water supplying step of supplying water alone to the covering member from the mixer before start of the gypsum slurry supplying step, wherein
   after start of the water supplying step, the pressing device may be switched from the pressing state to the separating state during a period before a portion of the covering member where the water alone supplied from the mixer is disposed reaches a location where the pressing device is disposed.

Although the gypsum plate manufacturing device and the gypsum plate manufacturing method have been described above based on the embodiments and the like, the present invention is not limited to the above embodiments and the like. Various modifications and alterations are possible within the scope of the present invention recited in claims.

The present application claims priority to Japanese Patent Application No. 2023-102665 filed with the Japan Patent Office on June 22, 2023, and the entire contents of Japanese Patent Application No. 2023-102665 are incorporated in the present international application by reference.

### REFERENCE SIGNS LIST

- 10: Gypsum plate manufacturing device
- 11: Covering member
- 111: First gypsum board base sheet
- 112: Second gypsum board base sheet
- 11A: Water supply starting point
- 11B: Slurry supply starting point
- 12: Mixer
- 121: Dispensing port
- 13: Conduit
- 14: Gypsum slurry
- 141: Location
- 15: Turning roller
- 16: Molding device
- 17: Gypsum slurry molded body
- 18: Control device
- 19: Detecting device
- 20,20A-20C,20a-20d: Pressing device
- 201: Pressing member
- 202: Driving device
- 2021: Rod
- 203: Frame
- 203A: Fulcrum
- 203B: Point of load
- 2031: First end
- 2032: Second end
- 204: Support
- 205: Resistance applying device
- 2051: Weight
- 2052: Connecting member
- 2053: Pulley
- 21: Conveying device
- 211: Pulley
- 212: Belt
- 213: Roller
- 213A: Roller
- 213B: Roller
- 22: Rough cutting device
- 22A: Upper cutter
- 221A: Rotary roll
- 222A: Blade
- 22B: Lower cutter
- 221B: Rotary roll
- 222B: Blade
- 301,302: Support
- L: Distance
- L1: Distance
- L2: Distance
- A: Double-sided arrow
- B: Double-sided arrow
- C: Double-sided arrow

## Claims

1. A gypsum plate manufacturing device configured to manufacture a gypsum plate in which at least an upper surface and a lower surface of a gypsum core are covered by a covering member, the gypsum plate manufacturing device comprising:
a conveying device configured to convey the covering member;
a mixer configured to prepare a gypsum slurry containing calcined gypsum and water, and supply the gypsum slurry onto the covering member;
a pressing device including a pressing member configured to press the covering member, being conveyed by the conveying device, against the conveying device, and a driving device configured to change a distance between the pressing member and the covering member; and
a control device configured to control the driving device to
change the distance between the pressing member and the covering member, and
switch between a pressing state, in which the pressing member presses the covering member against the conveying device, and a separating state, in which the pressing member is separated from the covering member, wherein
the control device sets the pressing state in response to the conveying device starting conveyance of the covering member, and subsequently switches from the pressing state to the separating state.

2. The gypsum plate manufacturing device according to claim 1, wherein
the control device switches from the pressing state to the separating state during a period before a portion of the covering member in which the gypsum slurry supplied from the mixer is disposed reaches a location where the pressing device is disposed.

3. The gypsum plate manufacturing device according to claim 1, wherein
the control device switches from the pressing state to the separating state during a period before a portion of the covering member in which water alone supplied from the mixer is disposed reaches a location where the pressing device is disposed.

4. The gypsum plate manufacturing device according to any one of claims 1 to 3, wherein
a plurality of the pressing devices are disposed along a width of the covering member conveyed by the conveying device.

5. The gypsum plate manufacturing device according to any one of claims 1 to 3, wherein
a plurality of the pressing devices are disposed along a conveying direction of the covering member in the conveying device.

6. The gypsum plate manufacturing device according to any one of claims 1 to 3, further comprising:
a molding device configured to mold the covering member and the gypsum slurry to form a gypsum slurry molded body; and
a rough cutting device configured to roughly cut the gypsum slurry molded body,
the molding device and the rough cutting device being sequentially provided along a conveying direction of the covering member and downstream, in the conveying direction of the covering member, of a location where the gypsum slurry is supplied onto the covering member from the mixer, wherein
the pressing device is disposed between the molding device and the rough cutting device.

7. The gypsum plate manufacturing device according to claim 6, wherein
the pressing device is disposed between the molding device and a location away from the molding device by 1/2 of a distance between the molding device and the rough cutting device.

8. The gypsum plate manufacturing device according to any one of claims 1 to 3, wherein
the pressing device includes a resistance applying device configured to apply a force in a direction moving the pressing member away from the covering member.

9. A gypsum plate manufacturing method for manufacturing a gypsum plate in which at least an upper surface and a lower surface of a gypsum core are covered by a covering member, the gypsum plate manufacturing method comprising:
a covering member conveying step of conveying the covering member by a conveying device; and
a gypsum slurry supplying step of supplying a gypsum slurry onto the covering member, the gypsum slurry being prepared by a mixer and containing calcined gypsum and water, wherein
a pressing state, in which a pressing member of a pressing device presses the covering member against the conveying device, is set at a time of start of the covering member conveying step, and a separating state, in which the pressing member is separated from the covering member, is set subsequently, and
the pressing device includes
the pressing member configured to press the covering member, being conveyed by the conveying device, against the conveying device, and
a driving device configured to change a distance between the pressing member and the covering member.

10. The gypsum plate manufacturing method according to claim 9, wherein
the pressing device is switched from the pressing state to the separating state during a period before a portion of the covering member where the gypsum slurry supplied from the mixer is disposed reaches a location where the pressing device is disposed.

11. The gypsum plate manufacturing method according to claim 9, further comprising:
a water supplying step of supplying water alone to the covering member from the mixer before start of the gypsum slurry supplying step, wherein
after start of the water supplying step, the pressing device is switched from the pressing state to the separating state during a period before a portion of the covering member where the water alone supplied from the mixer is disposed reaches a location where the pressing device is disposed.
